(19) Europäisches Patentamt
European Patent Office
Office européen des brevets

(11) Veröffentlichungsnummer: **0 253 123**
**A1**

(12) **EUROPÄISCHE PATENTANMELDUNG**

(21) Anmeldenummer: **87108068.5**

(51) Int. Cl.[4]: **C08L 77/00**, C08L 71/04

(22) Anmeldetag: **04.06.87**

(30) Priorität: **07.06.86 DE 3619225**

(43) Veröffentlichungstag der Anmeldung: **20.01.88 Patentblatt 88/03**

(84) Benannte Vertragsstaaten: **BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Boehlke, Klaus, Dr.**
**Gerhart-Hauptmann 53**
**D-6717 Hessheim(DE)**
Erfinder: **Heckmann, Walter, Dr.**
**Geiersbergstrasse 2**
**D-6940 Weinheim(DE)**
Erfinder: **Illers, Karl Heinz, Dr.**
**Huttenstrasse 20**
**D-6701 Otterstadt(DE)**
Erfinder: **Gausepohl, Hermann, Dr.**
**Neuweg 10**
**D-6704 Mutterstadt(DE)**
Erfinder: **Matthies, Paul, Dr.**
**Truebnerstrasse 59**
**D-6900 Heidelberg(DE)**

(54) **Thermoplastische Formmassen.**

(57) Thermoplastische Formmassen, enthaltend als wesentliche Komponenten

A) 5 - 95 Gew.% eines Polyamids

B) 5 - 95 Gew.% eines modifizierten Polyphenylenethers, hergestellt aus

$b_1$) 4,95 - 99,95 Gew.% eines Polyphenylenethers,

$b_2$) 0 - 90 Gew.% eines vinylaromatischen Polymeren,

$b_3$) 0,05 - 10 Gew.%

$b_{31}$) Fumarsäure und/oder

$b_{32}$) eines Maleinimids der allgemeinen Formel I

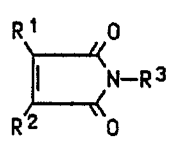

, (I),

wobei $R^1$, $R^2$ und $R^3$ Wasserstoff, Alkyl-, Alkoxy-, Cycloalkyl-, Alkenyl-, Aryl-, Arylen-oder Alkylengruppen mit 1 - 12 C-Atomen sind und/oder

EP 0 253 123 A1

$b_{33}$) eines Amid-Gruppen enthaltenden Monomeren mit einer polymerisierbaren Doppelbindung, und/oder

$b_{34}$) eines Lactam-Gruppen enthaltenden Monomeren mit einer polymerisierbaren Doppelbindung, und/oder

$b_{35}$) eines Halbesters oder Halbamids einer $\alpha,\beta$-ungesättigten Dicarbonsäure,

$b_4$) 0 - 80 Gew.% weiterer pfropfaktiver Monomerer und

$b_5$) 0 - 20 Gew.% eines Radikalstarters

C) 0 - 90 Gew.% eines nicht-modifizierten Polyphenylenethers,

D) 0 - 45 Gew.% eines vinylaromatischen Polymeren

E) 0 - 40 Gew.% eines schlagzäh modifizierenden Kautschuks.

## Thermoplastische Formmassen

Die Erfindung betrifft neue thermoplastische Formmassen, enthaltend als wesentliche Komponenten

A) 5 - 95 Gew.% eines Polyamids

B) 5 - 95 Gew.% eines modifizierten Polyphenylenethers, hergestellt aus

$b_1$) 4,95 - 99,95 Gew.% eines Polyphenylenethers,

$b_2$) 0 - 90 Gew.% eines vinylaromatischen Polymeren,

$b_3$) 0,05 - 10 Gew.%

$b_{31}$) Fumarsäure und/oder

$b_{32}$) eines Maleinimids der allgemeinen Formel I

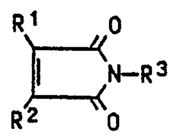

(I),

wobei $R^1$, $R^2$ und $R^3$ Wasserstoff, Alkyl-, Alkoxy-, Cycloalkyl-, Alkenyl-, Aryl-, Arylen-oder Alkylengruppen mit 1 - 12 C-Atomen sind, und/oder

$b_{33}$) eines Amid-Gruppen enthaltenden Monomeren mit einer polymerisierbaren Doppelbindung, und/oder

$b_{34}$) eines Lactam-Gruppen enthaltenden Monomeren mit einer polymerisierbaren Doppelbindung, und/oder

$b_{35}$) eines Halbesters oder Halbamids einer $\alpha,\beta$-ungesättigten Dicarbonsäure

$b_4$) 0 - 80 Gew.% weitere pfropfaktive Monomere und

$b_5$) 0 - 20 Gew.% eines Radikalstarters

C) 0 - 90 Gew.% eines nicht-modifizierten Polyphenylenethers,

D) 0 - 45 Gew.% eines vinylaromatischen Polymeren

E) 0 - 40 Gew.% eines schlagzäh modifizierenden Kautschuks, wobei sich die Prozentzahlen A) - E) und $b_1$) - $b_5$) jeweils zu 100 % ergänzen.

Außerdem betrifft die Erfindung ein Verfahren zur Herstellung derartiger Formmassen sowie deren Verwendung zur Herstellung von Formkörpern und die daraus hergestellten Formkörper.

Polyphenylenether (PPE) sind Kunststoffe mit sehr guten thermischen, mechanischen und elektrischen Eigenschaften, weisen jedoch nur eine sehr geringe Lösungsmittelbeständigkeit auf. Dies gilt auch für ein im Handel befindliches Gemisch aus Polyphenylenether und Styrolpolymerisaten. Die Verwendbarkeit derartiger Produkte ist daher eingeschränkt.

Aus der US-A-3 379 792 ist bekannt, daß die Schmelzfließeigenschaften von Polyphenylenethern durch Zusatz von bis zu 25 Gew.% eines Polyamids verbessert werden. Ferner wird in dieser Patentschrift festgestellt, daß bei einem Polyamidzusatz von mehr als 20 Gew.% andere Eigenschaften des Polyphenylenethers erheblich verschlechtert werden.

Aus der GB-A 2 054 023 sind auch bereits Mischungen aus Polyphenylenethern und Polyamiden mit höheren Polyamid-Gehalten bekannt; zur Erzielung guter Eigenschaften ist es jedoch erforderlich, einen längeren Mischvorgang in der Schmelze vorzunehmen. Bei solch hoher thermischer Belastung über größere Zeiträume treten jedoch leicht Abbauerscheinungen auf.

In der EP-A 24 120 und EP-A 46 040 werden Mischungen aus Polyamiden, nicht modifizierten Polyphenylenethern und Maleinsäureanhydrid und/oder Maleinsäureimid beschrieben. Die in diesen Schriften beschriebenen Massen bzw. die daraus hergestellten Formkörper weisen eine unbefriedigende Schlagzähigkeit, insbesondere bei der Verwendung von Kautschuk als zusätzliche Komponente, und einen für viele Anwendungszwecke viel zu niedrigen Schmelzindex (MFI) auf.

Aufgabe der vorliegenden Erfindung war es, thermoplastische Formmassen zur Verfügung zu stellen, die neben einer guten Verarbeitbarkeit gute thermische, mechanische und dielektrische Eigenschaften aufweisen. Insbesondere sollten sich die Formmassen durch eine hohe Schlagzähigkeit (auch mehraxial) und eine gute Lösungsmittelbeständigkeit auszeichnen.

Erfindungsgemäß wird diese Aufgabe durch die eingangs definierten thermoplastischen Formmassen gelöst.

Bevorzugte Massen dieser Art sind den Unteransprüchen zu entnehmen.

Als Komponente A enthalten die erfindungsgemäßen Formmassen 5 bis 95 Gew.% mindestens eines Polyamids. Geeignet sind lineare Polyamide z.B. mit einer relativen Viskosität von 2,2 bis 4,5, gemessen in 1 gew.-%iger Lösung in 96 gew.-%iger Schwefelsäure bei 23°C. Bevorzugt seien genannt Polyamide, die sich von Lactamen mit 7 bis 13 Ringgliedern ableiten, wie Polycaprolactam, Polycapryllactam oder Polylaurinlactam sowie Polyamide, die durch Umsetzung von Dicarbonsäuren mit Diaminen erhalten werden. Geeignete Dicarbonsäuren sind beispielsweise Alkandicarbonsäuren mit 6 bis 12, insbesondere 6 bis 10 Kohlenstoffatomen sowie Terephthalsäure und Isophthalsäure sowie beliebige Mischungen dieser Säuren.

Als Diamine, seien beispielsweise Alkandiamine mit 6 bis 12, insbesondere 6 bis 8 Kohlenstoffatomen, ferner m-Xylylendiamin, Bis(4-aminophenyl)methan, Bis-(4-aminocyclohexyl)methan oder Bis(4-aminophenyl)propan-2,2 oder deren Mischungen genannt.

Es ist auch möglich und manchmal vorteilhaft Mischungen der genannten Polyamide zu verwenden. Besondere technische Bedeutung haben Polyamid-6 (Polycaprolactam), Polyamid-66 (Polyhexamethylenadipinamid) sowie Polyamide, die aus Hexamethylendiamin und Isophthalsäure sowie Terephthalsäure aufgebaut sind, erlangt.

Gemäß einer besonders bevorzugten Ausführungsform wird als Komponente A ein Polyamid eingesetzt, das zu mindestens 80 Gew.% aus wiederkehrenden Einheiten der allgemeinen Formel V

$$\left[ NH-(CH_2)_4-NH-\underset{\underset{O}{\|}}{C}-(CH_2)_4-\underset{\underset{O}{\|}}{C} \right]$$

aufgebaut ist.

Derartige Polyamide sind z.B. durch Kondensation von 1,4-Diaminobutan mit Adipinsäure unter erhöhter Temperatur erhältlich. Herstellungsverfahren für Polyamide dieser Struktur sind z.B. in den EP-A-38 094, EP-A-38 582 und EP-A-39 524 beschrieben.

Derartige Produkte, die Polyamide der obigen Struktur (Polyamid-4,6) enthalten, zeichnen sich besonders durch gute Schlagzähigkeiten und insbesondere auch eine helle Eigenfarbe aus.

Bevorzugte Formmassen enthalten 5 bis 80 Gew.%, insbesondere 25 bis 70 Gew.-% an thermoplastischen Polyamiden.

Als Komponente B enthalten die erfindungsgemäßen Formmassen 5 bis 95, vorzugsweise 20 bis 65, insbesondere 30 bis 65 Gew.% mindestens eines modifizierten Polyphenylenethers, der aus den Komponenten $b_1$, $b_2$, $b_3$ und gegebenenfalls $b_4$ und $b_5$ hergestellt wird.

Unter "modifiziert" soll dabei eine durch die Umsetzung der Komponenten $b_1$) bis $b_5$) hervorgerufene Veränderung des Polyphenylenethers verstanden werden.

Bei der Komponente $b_1$ handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Der Anteil der Komponente $b_1$), bezogen auf die Summe der Komponenten $b_1$) bis $b_5$) beträgt 4,95 bis 99,95, vorzugsweise 10 bis 99,95 und insbesondere 50 bis 90 Gew.%.

Die eingesetzten Polyphenylenether weisen im allgemeinen ein Molekulargewicht (Gewichtsmittelwert) im Bereich von 10.000 bis 80.000, vorzugsweise von 15.000 bis 60.000 auf.

Nur beispielsweise seien hier einige Polyphenylenether aufgeführt, wie sie u.a. in O. Olabisi, l.c., S. 224 bis 230 und 245 genannt werden wie Poly(2,6-diethyl-1,4-phenylen)-oxid, Poly(2-methyl-6-ethyl-1,4-phenylen)oxid, Poly(2-methyl-6-propyl-1,4-phenylen)oxid, Poly-(2,6-dipropyl-1,4-phenylen)oxid, Poly(2-ethyl-6-propyl-1,4-phenylen)oxid, bevorzugt Poly(2,6-dimethyl-1,4-phenylen)oxid oder Copolymere, wie solche, die 2,3,6-Trimethylphenol enthalten, außerdem Polymermischungen. Besonders bevorzugt ist jedoch Poly(2,6-dimethyl-1,4-phenylen)oxid.

Die Komponente $b_2$), die gegebenenfalls am Aufbau des modifizierten Polyphenylenethers beteiligt ist, ist ein vinylaromatisches Polymer, das vorzugsweise mit dem eingesetzten Polyphenylenether verträglich ist.

Das Molekulargewicht (Gewichtsmittel) dieser Polymere liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, α-Methylstyrol, p-Methylstyrol genannt; in untergeordneten Anteilen (vorzugsweise nicht mehr als 20, insbesondere nicht mehr als 8 Gew.%), können auch Comonomere wie (Meth)acrylnitril oder (Meth)acrylsäureestern am Aufbau beteiligt sein. Ein besonders bevorzugtes vinylaromatisches Polymeres ist Polystyrol. Es versteht sich, daß auch Mischungen dieser Polymere eingesetzt werden können.

Verfahren zur Herstellung solcher vinylaromatischer Polymerer sind an sich bekannt und in der Literatur beschrieben, so daß sich hier nähere Angaben erübrigen.

Nur beispielsweise seien hier als geeignete Polymerisationsverfahren die Masse-, Suspensions-, Emulsions-oder Lösungspolymerisation erwähnt.

Der Anteil des vinylaromatischen Polymeren $b_2$) an der Komponente B) liegt im Bereich von 0 bis 90, vorzugsweise 0 bis 70 und insbesondere 0 bis 60 Gew.%.

Bei Verwendung von Fumarsäure ($b_{31}$) als Bestandteil $b_3$) hat es sich häufig als vorteilhaft erwiesen, wenn die Formmassen einen gewissen Mindestgehalt an vinylaromatischem Polymeren $b_2$), vorzugsweise mindestens 1,95 Gew.%, insbesondere mindestens 4,95 Gew.%, bezogen auf die Komponente B) enthalten.

Als wesentliche Komponente $b_3$) enthält der modifizierte Polyphenylenether B) mindestens eine der Verbindungen $b_{31}$) bis $b_{35}$)

Prinzipiell können auch Mischungen verschiedener Verbindungen $b_{31}$) bis $b_{35}$) eingesetzt werden, doch ist im allgemeinen die Verwendung nur einer dieser Verbindungsarten vorteilhaft.

Bei der Komponente $b_{31}$) handelt es sich um Fumarsäure. Deren Anteil beträgt 0,05 bis 10 Gew.%, vorzugsweise 0,1 bis 5 Gew.%, bezogen auf die Summe der Komponenten $b_1$) bis $b_5$).

Die Komponenten $b_{32}$) sind Maleinimide der allgemeinen Formel I

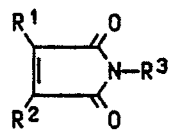

(I),

wobei $R^1$, $R^2$ und $R^3$ Wasserstoff, Alkyl-, Alkoxy-, Cycloalkyl-, Alkenyl-, Aryl-, Arylen-oder Alkylengruppen mit 1 bis 12 C-Atomen sind.

Vorzugsweise sind die Substituenten $R^1$, $R^2$ und $R^3$ Wasserstoff oder Alkylgruppen mit 1 bis 4 C-Atomen, beispielsweise Methyl-, Ethyl-oder n-, i-oder t-Butyl, Cycloalkylgruppen mit bis zu 8 C-Atomen oder Phenylgruppen, die gegebenenfalls alkyl-oder alkoxysubstituiert sein können.

Nur beispielhaft seien als bevorzugte Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-(p-Methoxyphenyl)maleinimid, N-Benzylmaleinimid, N-(1-Naphthyl)maleinimid oder deren Mischungen genannt. Von diesen wird N-Phenylmaleinimid besonders bevorzugt.

Der Anteil des Maleinimids der allgemeinen Formel I beträgt 0,05 bis 10, vorzugsweise 0,1 bis 5 Gew.%, bezogen auf die Summe der Komponenten $b_1$) bis $b_5$).

Ebenfalls geeignet als Komponente $b_3$) sind Amidgruppen enthaltende Monomere mit mindestens einer polymerisierbaren Doppelbindung, vorzugsweise solche der allgemeinen Formeln II oder III

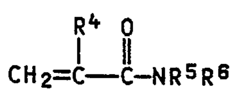

(II)

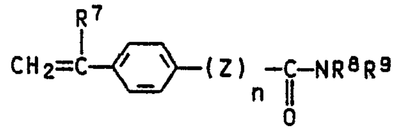

(III),

wobei $R^4$, $R^5$, $R^6$, $R^7$, $R^8$ und $R^9$ Wasserstoff, Alkyl-oder Alkoxygruppen mit 1 bis 12 C-Atomen, Cycloalkylgruppen mit bis zu 12 C-Atomen oder Arylgruppen und Z Alkylengruppen mit 1 bis 12 C-Atomen darstellen und n den Wert 0 oder 1, vorzugsweise 0 hat.

Bevorzugte Substituenten $R^5$, $R^6$, $R^8$ und $R^9$ sind Alkylgruppen mit 1 bis 10 C-Atomen, Cycloalkylgruppen mit bis zu 8 C-Atomen oder Arylgruppen, vorzugsweise Phenyl. $R^4$ und $R^7$ sind bevorzugt H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt.

Bevorzugt werden Acrylamid, Methacrylamid, N-Phenylacrylamid und N-Phenylmethacrylamid verwendet.

Der Anteil der Komponente $b_{33}$) beträgt 0,05 bis 10, vorzugsweise 0,1 bis 10, insbesondere 1 bis 5 Gew.%, bezogen auf die Summe der Komponenten $b_1$) bis $b_5$).

Als Komponente $b_3$) kann auch ein Lactam-Gruppen enthaltendes Monomer mit mindestens einer polymerisierbaren Doppelbindung ($b_{34}$) eingesetzt werden.

Vorzugsweise werden Lactame der allgemeinen Struktur IV

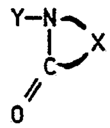 (IV)

eingesetzt, wobei X eine lineare verzweigte Alkylengruppe mit 2 bis 15 C-Atomen darstellt und Y die allgemeine Formel

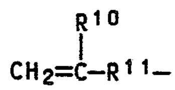

hat,

wobei $R^{10}$ ein Wasserstoffatom, eine Alkyl-oder Alkoxygruppe mit 1 bis 4 C-Atomen und R11 einen zweibindigen Substituenten

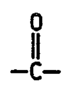

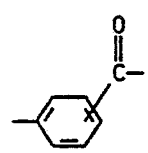

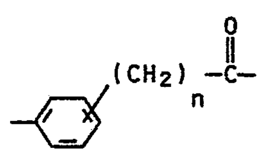 ,

wobei n eine ganze Zahl von 1 bis 4 ist, darstellen.

Bevorzugte Substituenten Y sind ganz allgemein Vinyl-, Acryloyl-, Methacryloyl-oder Reste mit Styrol-Grundstrukturen.

Besonders bevorzugt sind Lactameinheiten, die zu Polyamiden polymerisierbar oder copolymerisierbar sind, wie dies in Houben-Weyl, Methoden der organ. Chemie, Band X/2, S. 511 bis 587, (1958) und Band XIV/2, S. 111 bis 131, beschrieben wird.

Beispielsweise seien genannt:

$\beta$-Propiolactame (Azetidin-2-one), wie

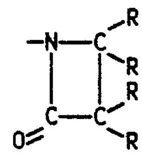

wobei R gleiche oder verschiedene Alkylgruppen mit 1 bis 6 C-Atomen oder Wasserstoff sind. Derartige Verbindungen sind beschrieben bei R. Graf, Angewandte Chemie, 74, 523 bis 530, (1962) und H. Bastian, Angewandte Chemie, 80, 304 bis 312, (1968).

Nur beispielhaft sei als ein Vertreter dieser Gruppe 3,3'-Dimethyl-3-propiolactam genannt.

Ebenfalls bevorzugte Lactam-Einheiten sind 2-Methylpyrrolidone

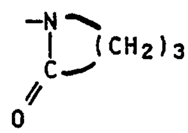

ε-Caprolactam, wie

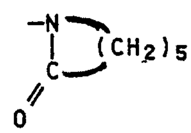

und außerdem 7-Önantholactam, 8-Capryllactam und 12-Laurinlactam wie sie bei K. Dachs, Angewandte Chemie, 74, 540 bis 545, (1962) beschrieben werden. Ganz besonders bevorzugt sind 2-Pyrrolidone und ε-Caprolactame.

Es können auch Mischungen dieser Verbindungen eingesetzt werden.

Vorzugsweise sind die Lactameinheiten über eine Carbonylgruppe am Stickstoff in den Polyphenylenether B eingebaut, wie dies nachstehend allgemein dargestellt ist.

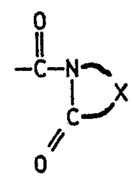

Als besonders bevorzugtes Beispiel einer Komponente $b_{34}$) sei hier nur N-(Meth)acryloyl-ε-caprolactam

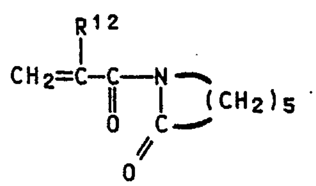

genannt,

wobei $R^{12}$ ein Wasserstoffatom oder eine Methylgruppe sein kann.

Der Anteil der Komponente $b_{34}$) beträgt 0,05 bis 10, vorzugsweise 0,1 bis 10 und insbesondere 0,5 bis 5 Gew.%, bezogen auf die Summe der Komponenten $b_1$) bis $b_5$).

Bei der Komponente $b_{35}$) handelt es sich um Halbester oder Halbamide von α,β-ungesättigten Dicarbonsäuren. Als Beispiele für bevorzugte Dicarbonsäuren seien Maleinsäure, Fumarsäure, Chlormaleinsäure, Dichlormaleinsäure, Methylmaleinsäure, Butenylbernsteinsäure und Tetrahydrophthalsäure genannt, von denen Maleinsäure und Fumarsäure besonders bevorzugt werden.

Zur Herstellung der erfindungsgemäß eingesetzten Halbester oder Halbamide können diese Säuren oder deren Anhydride mit den entsprechenden Alkoholen bzw. Aminen umgesetzt werden. Entsprechende Verfahren sind an sich bekannt und in der Literatur beschrieben, so daß sich hier nähere Angaben erübrigen.

Als Alkohole zur Herstellung der Halbester werden bevorzugt primäre und sekundäre Monoalkohole, wie Methanol, Ethanol, n-und i-Propanol, n-und i-Butanol, Pentanole, Hexanole, Heptanole, Octanole, z.B. 2-Ethylhexylalkohol und höhere Alkohole wie Dodecanole und cycloaliphatische Alkohole, z.B. Cyclohexanol eingesetzt. Weiter eignen sich auch Alkohole mit aromatischen Struktureinheiten wie z.B. Benzylalkohol. Neben C, H und O können die Alkohole auch Heteroatome - in der Hauptkette oder als Substituenten - wie N, S und Si enthalten. Schließlich seien auch Alkohole mit Ketogruppen in der Kette oder mit Halogensubstituenten erwähnt. Bevorzugt werden jedoch Alkanole mit 1 bis 6 C-Atomen.

Als Amine zur Herstellung der erfindungsgemäß eingesetzten Halbamide seien ganz allgemein sekundäre Amine und N-Alkylaniline genannt. Beispiele hierfür sind N-Methyl-oder N-Ethylalkylamine oder N-Methylanilin. Wie die Alkohole können die Amine auch Heteroatome und funktionelle Gruppen enthalten.

Ganz allgemein werden Halbester den Halbamiden vorgezogen. Der Anteil von $b_{35}$) beträgt 0,05 bis 10, vorzugsweise 0,1 bis 5 Gew.%, bezogen auf das Gesamtgewicht der Komponente B).

Formmassen, die die Komponente $b_{35}$) enthalten, weisen häufig besonders gute Fließeigenschaften, d.h. besonders hohe Schmelzindex-Werte (MFI) auf.

Gegebenenfalls können bei der Herstellung des modifizierten Polyphenylenethers B auch weitere Comonomere $b_4$) eingesetzt werden, die unter den Herstellungsbedingungen mit den Komponenten $b_1$) und gegebenenfalls $b_2$) reagieren bzw. auf diese aufpfropfen. Beispielsweise seien hier Acrylsäure, Methacrylsäure, Acrylate, Methacrylate und vinylaromatische Monomere wie Styrol, $\alpha$-Methylstyrol und Vinyltoluol genannt, um nur einige aufzuführen.

Der Anteil der Komponente $b_4$) beträgt 0 bis 80, vorzugsweise 0 bis 45 und insbesondere nicht mehr als 20 Gew.%, bezogen auf die Summe der Komponenten $b_1$) bis $b_5$). Besonders bevorzugt werden Formmassen, die keine Komponente $b_4$) enthalten.

Als Komponente $b_5$) können bei der Herstellung der modifizierten Polyphenylenether B) bis zu 20 Gew.% an Radikalstartern eingesetzt werden.

Der Anteil der Komponente $b_5$) ist in der Regel geringer als die Summe der Anteile der Komponenten $b_3$) und $b_4$). Vorzugsweise handelt es sich dabei um ein organisches Peroxid oder eine Azo-Verbindung.

Besonders bevorzugt sind organische Peroxide mit einer Halbwertszeit im Bereich von 1 bis 30 sec. bei 200°C. Die Wahl des Radikalstarters richtet sich nach der gewünschten Reaktionstemperatur.

Beispielsweise seien als Radikalstarter genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvalerisansäure-butylester, 2,2-Di-tert.-butylperoxybutan, Dicumylperoxid, tert.-Butylcumylperoxid, 1,3-Di(tert.-butylperoxyisopropyl)benzol, Di-tert.-butylperoxid, Di-isopropylbenzolmonohydroperoxid, Cumolhydroperoxid, tert.-Butylhydroperoxid, 2,2-Azo-di(2,4-dimethylvaleronitril), Azo-bis-isobutyronitril, wobei Dicumylperoxid besonders bevorzugt wird.

Häufig hat es sich als vorteilhaft erwiesen, ohne die Komponente $b_5$) zu arbeiten. Dies gilt insbesondere dann, wenn als Komponente $b_3$) Fumarsäure ($b_{31}$) eingesetzt wird, da hier bei der Verwendung von Radikalstartern unter Umständen unerwünschte Nebenreaktionen auftreten können.

Zur Herstellung des modifizierten Polyphenylenethers B können die Komponenten $b_1$) bis $b_5$) bei 250 bis 350°C, vorzugsweise 265 bis 295°C, miteinander umgesetzt werden. Hierzu eignen sich besonders Extruder, da in diesen im allgemeinen auch eine gute Durchmischung der Komponenten erzielt wird. Die Verweilzeiten liegen im allgemeinen im Bereich von 0,5 bis 30 min., vorzugsweise von 1 bis 3 min. Besonders gut für das erfindungsgemäße Verfahren eignen sich Zweischneckenextruder.

Nachstehend wird eine besonders bevorzugte Verfahrensvariante beschrieben.

Die Komponenten $b_1$) bis $b_5$) werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen eingesetzt.

Prinzipiell ist die Herstellung des modifizierten Polyphenylenethers auch in jedem Reaktionsgefäß, welches eine Reaktion der Komponenten miteinander ermöglicht, durchführbar.

Manchmal ist es vorteilhaft, wenn die erfindungsgemäßen Formmassen als Komponente C) einen nichtmodifizierten Polyphenylenether enthalten. Dieser entspricht bevorzugt dem als Komponente $b_1$) eingesetzten Polyphenylenether, weshalb hier auf die dortigen Ausführungen zu geeigneten Verbindungen verwiesen wird. Der Anteil der Komponente C beträgt, falls vorhanden, maximal 90, vorzugsweise weniger als 50 Gew.%, bezogen auf die Summe der Komponenten A) bis E).

Als weiteren Bestandteil D) können die erfindungsgemäßen Formmassen gegebenenfalls in einer Menge bis zu 45, vorzugsweise bis zu 30 Gew.%, vinylaromatische Polymere enthalten (bezogen auf die Summe der Komponenten A) bis E)). Geeignet sind bevorzugt mit Polyphenylenethern verträgliche Polymere, wie sie bereits als Komponente $b_2$) beschrieben wurden. Für nähere Einzelheiten sei deshalb auf die Ausführungen zur Komponente $b_2$) verwiesen.

Die Komponente D) kann auch schlagzäh modifiziert sein. Solche Polymere sind dem Fachmann als schlagzähes Polystyrol (HIPS) bekannt. Dabei werden die vinylaromatischen Polymeren in Gegenwart eines Schlagzähmodifiers hergestellt oder die vinylaromatischen Polymeren mit gepfropften Kautschuken abgemischt. Als kautschukartige Polymere seien beispielsweise Polybutadien-, Styrol-Butadien-, Styrol-b-Butadien, Acrylnitril-Butadien-, Ethylen-Propylen-, Polyacrylat-und Polyisopren-Kautschuke genannt.

Neben den in der Komponente D) gegebenenfalls vorhandenen, gepfropften Kautschuken, wie Polybutadien-, Acrylat-, Styrol-Butadien-, Polybuten-Kautschuk, hydrierten Styrol-Butadien-, Acrylnitril-Butadien-, Ethylen-Propylen-und Polyisopren-Kautschuken können diese auch ungepfropft als Komponente E) zugesetzt werden. Als Kautschuke E) seien weiter erwähnt styrolgepfropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert (taper)-, ABAB-, ABAB-verschmierte Stern-Block-Copolymere und ähnliche, analoge Isopren-Blockpolymerisate und (teil)hydrierte Blockcopolymere.

Die Komponente E) kann in Mengen bis 40, vorzugsweise bis zu 30 Gew.%, bezogen auf die Summe der Komponenten A) bis E), in den erfindungsgemäßen Formmassen vorhanden sein.

Neben den Komponenten A) bis E) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 40, insbesondere nicht mehr als 20 Gew.%, bezogen auf das Gesamtgewicht der Komponenten A) bis E).

Als Zusatzstoffe seien genannt Hitze-und Lichtstabilisatoren, Gleit-und Entformungsmittel und Färbemittel wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe wie Gipsfasern, synthetische Calciumsilikate, Kaolin, calciniertes Kaolin, Wollastonit, Talkum, Kreide, ferner Flammschutzmittel, wie Phosphorverbindungen, z.B. Phosphate, Phosphorsäureester, Phosphorigsäureester, Phosphinsäureester, Phosphonigsäureester oder organische Phosphinoxide.

Auch niedermolekulare oder hochmolekulare Polymere kommen als Zusatzstoffe in Betracht.

Die erfindungsgemäßen thermoplastischen Formmassen erhält man zweckmäßig durch Mischen der Einzelkomponenten bei Temperaturen von 250 bis 320°C in üblichen Mischvorrichtungen, wie Knetern, Banbury-Mischern und Einschneckenextruder, vorzugsweise jedoch mit einem Zweischneckenextruder. Um eine möglichst homogene Formmasse zu erhalten, ist eine intensive Durchmischung notwendig. Die Abmischreihenfolge der Komponenten kann variiert werden, so können zwei oder gegebenenfalls drei Komponenten vorgemischt werden, es können aber auch alle Komponenten gemeinsam gemischt werden.

Es sei erwähnt, daß bei der Herstellung der Formmassen manchmal eine Reaktion zwischen den Komponenten A) bis E) auftreten kann, so daß im Endprodukt keine reine Mischung dieser Komponenten mehr vorliegt.

Die erfindungsgemäßen Formmassen zeichnen sich durch ihre ausgewogenen Eigenschaften, insbesondere aber durch ihre gute Schlagzähigkeit (auch mehraxial) und ihre Lösungsmittelbeständigkeit aus.

Sie eignen sich besonders zur Herstellung von Formkörpern durch Spritzguß oder Extrusion.

Beispiele 1 bis 20

Herstellung modifizierter Polyphenylenether B

$B_1$: 78,5 Gew.% Poly-(2,6-dimethyl-1,4-phenylenether (PPE) mit einer relativen Viskosität von 0,63 (gemessen in 1 gew.%iger Lösung in $CHCl_3$ bei 25°C), 20 Gew.% Polystyrol (PS 144 C, Schmelzflußindex MFI bei 200°C/5 kg Belastung = 24 g/10 min) und 1,5 Gew.% Fumarsäure wurden in einen Zweischneckenextruder (ZSK 53; Werner & Pfleiderer) dosiert, in einem ersten Teil unter Verwendung von Knetelementen bei 255°C aufgeschmolzen, in einem zweiten Teil unter Kneten und Verwendung von Knetelementen bei 265°C umgesetzt und anschließend in einer Entgasungszone bei 255°C durch Anlegen von Vakuum entgast. Die mittlere Verweilzeit im Extruder betrug 2,5 min. Die austretende Schmelze wurde durch ein Wasserbad geleitet, granuliert und getrocknet. Das Granulat hatte einen Fumarsäuregehalt von 0,7 Gew.% und eine hellgelbe Farbe.

$B_2$: 87,5 Gew.% PPE, 10 Gew.% Polystyrol (beide wie bei $B_1$) und 2,5 Gew.% Fumarsäure wurden wie bei der Herstellung von $B_1$ umgesetzt. Das Granulat enthielt 1,3 Gew.% Fumarsäure und war hellgelb gefärbt.

$B/V_1$: Zum Vergleich wurde ein modifizierter PPE aus 97,5 Gew.% Polyphenylen-ether (wie bei $B_1$), 1,5 Gew.% Maleinsäureanhydrid und 1 Gew.% Dicumylperoxid wie bei der Herstellung von $B_1$ hergestellt. Das Granulat enthielt 0,3 Gew.% Maleinsäureanhydrid, war stark vernetzt und braun gefärbt.

$B/V_2$: Als zweites Vergleichsprodukt wurde ein aus 86 Gew.% PPE, 10 Gew.% Polystyrol, 2,5 Gew.% Fumarsäure und 1,5 Gew.% Dicumylperoxid (PPE und Polystyrol waren mit den bei der Herstellung von $B_1$ eingesetzten Produkten identisch) hergestellter modifizierter PPE eingesetzt. Der Maleinsäureanhydrid-Gehalt betrug 0,9 Gew.% und das Produkt war braun gefärbt.

Als Komponenten A, C, D und E wurden folgende Produkte eingesetzt:

Komponente $A_1$:

Polyamid-6 (Polycaprolactam) mit einem Molekulargewicht (Gewichtsmittelwert) von 38.000.

Komponente $C_1$:

Poly-(2,6-dimethyl-1,4-phenylen)ether mit einer relativen Viskosität von 0,63 (gemessen in 1 gew.%iger Lösung in $CHCl_3$ bei 25°C).

Komponente D:

Hochschlagzähes Polystyrol (HIPS) mit einem Gehalt von 8 Gew.% Butadien (Buna CB NX 529 C, Fa. Bayer anionisch hergestellt) und einem Schmelzindex (200°C/5,0 kg) von 15 g/10 min.

Komponente E:

Styrol-Butadien-Styrol-Dreiblockcopolymer mit einem Styrolgehalt von 30 Gew.% (Cariflex® TR 1102 der Fa. Shell);

Zur Herstellung der Formmassen in den Beispielen 1-5, 7-16 und 17-20 wurden die Komponenten A) bis E) bzw. $B/V_1$) und $B/V_2$) wie in Tabelle 1 angegeben auf einem Zweischneckenextruder gemischt, die Formmassen wurden granuliert und im Spritzguß zu Formkörpern verarbeitet.

Die Formmassen in den Vergleichsbeispielen 6 und 17 wurden entsprechend hergestellt, nur wurde kein modifizierter Polyphenylenether eingesetzt. Die erhaltenen Produkte waren teilweise stark vernetzt, ließen sich nur schwer verarbeiten und nicht granulieren.

Die Ergebnisse der Schlagzähigkeits-und Kerbschlagzähigkeitsmessungen sind Tabelle 1 zu entnehmen.

Tabelle 1

| Beispiel Nr. | PA $A_1$ | mod.PPE B | PPE $C_1$ | PS D | Kautschuk E | DIN 53453 Schlagzähigkeit $kJ/m^2$ (23°C) | DIN 53453 Kerbschlagzähigkeit $kJ/m^2$ (23°C) | Farbe |
|---|---|---|---|---|---|---|---|---|
| | Gew.-% | | | | | | | |
| 1 | 60 | 40 $B_1$ | - | - | - | 28,1 | 3,6 | hellgelb |
| 2* | 54,5 | - | 45,5 | - | - | 8,2 | 0,4 | hellgelb |
| 3 | 48,2 | 39,5 $B_1$ | - | - | 12,3 | kein Bruch | 17,3 | hellgelb |
| 4* | 48,2 | - | 39,5 | - | 12,3 | 13,1 | 0,8 | hellgelb |
| 5* | 48,2 | 39,5 $B/V_1$ | - | - | 12,3 | 46,0 | 1,5 | braun |
| 6* | 47,8 | - | 39,1 | 0,9 MSA 1) | 12,2 | 30 - 60+ | 1,2 - 3,7+ | braun |
| 7 | 54,5 | 18,2 $B_1$ | 18,2 | - | 9,1 | kein Bruch | 11,2 | hellgelb |
| 8 | 52,6 | 17,5 $B_1$ | 8,8 | 8,8 | 12,3 | kein Bruch | 10,6 | fast weiß |
| 9 | 61,4 | 17,5 $B_1$ | - | 8,8 | 12,3 | kein Bruch | 9,1 | fast weiß |
| 10* | 61,4 | - | 17,5 | 8,8 | 12,3 | 10,1 | 0,6 | fast weiß |
| 11 | 44,6 | 35,7 $B_1$ | 8,9 | - | 10,8 | kein Bruch | 11,8 | hellgelb |
| 12 | 55 | 45 $B_2$ | - | - | - | 25,1 | 2,8 | hellgelb |
| 13* | 55 | - | 45 | - | - | 10,5 | 0,4 | hellgelb |
| 14 | 53,6 | 35,7 $B_2$ | - | - | 10,7 | kein Bruch | 16,1 | hellgelb |
| 15* | 53,6 | - | 35,7 | - | 10,7 | 15,1 | 1,3 | hellgelb |
| 16* | 53,6 | 35,7 $B/V_2$ | - | - | 10,7 | 56,3 | 4,2 | braun |
| 17* | 53,1 | - | 35,4 | 0,9 MSA 1) | 10,6 | 40 - 50 | 3,0 | braun |
| 18 | 39,5 | 48,2 $B_2$ | - | - | 12,3 | kein Bruch | 13,4 | hellgelb |
| 19 | 52,4 | 23,8 $B_2$ | 19,0 | - | 4,8 | 70,3 | 5,1 | hellgelb |
| 20 | 50,9 | 32,4 $B_2$ | - | 9,3 | 7,4 | 80,4 | 4,1 | hellgelb |

* Vergleichsbeispiele

\+ stark schwankende Meßwerte

1) In diesen Beispielen wurde statt Polystyrol Maleinsäureanhydrid eingesetzt.

Die Ergebnisse in Tabelle 1 belegen, daß sich die erfindungsgemäßen Formmassen, die den modifizierten Polyphenylenether enthalten, durch eine sehr gute Schlagzähigkeit und Kerbschlagzähigkeit und eine nur schwache Färbung im Vergleich zu bekannten Formmassen auszeichnen.

Beispiele 21 bis 29

Herstellung modifizierter Polyphenylenether B

$B_3$: 99,1 Gew.% Poly-(2,6-dimethyl-1,4-phenylen)ether mit einer relativen Viskosität von 0,60 (gemessen in 1 gew.%iger Lösung in $CHCl_3$ bei 25°C) und 0,9 Gew.% N-Phenylmaleinimid wurden in einen Zweischneckenextruder dosiert (ZSK 53, Werner & Pfleiderer), in einem ersten Teil unter Verwendung von Knetelementen bei 280°C aufgeschmolzen, anschließend in einem zweiten Teil unter Kneten und Verwendung von zurückfördernden Knetelementen bei 270°C umgesetzt und anschließend in einer Entgasungszone bei 280°C durch Anlegen von Vakuum entgast. Die mittlere Verweilzeit im Extruder betrug 2 min. Die austretende Schmelze wurde durch ein Wasserbad geleitet, granuliert und getrocknet. Der IR-spektroskopisch an einem Film gemessene Gehalt an N-Phenylmaleinimid betrug 0,6 Gew.%.

$B_4$: 88 Gew.% PPE (wie bei $B_3$), 10 Gew.% Polystyrol (wie bei $B_1$, Beispiele 1 bis 20) und 2 Gew.% N-Phenylmaleinimid wurden wie für $B_3$) beschrieben, umgesetzt. Der N-Phenylmaleinimid-Gehalt betrug 1,0 Gew.%.

Zur Herstellung der erfindungsgemäßen Formmassen wurden die Komponenten A) bis E) auf einem Zweischneckenextruder bei 280°C abgemischt, die erhaltene Formmasse wurde granuliert und getrocknet.

Die Komponenten A, C, D und E waren die gleichen wie in den Beispielen 1 bis 20.

Die Vergleichsbeispiele 22, 25 und 27 wurden ohne die Komponente $B_3$ oder $B_4$ hergestellt.

Die Zusammensetzung der einzelnen Formmassen und die Ergebnisse der Schlagzähigkeits-und Kerbschlagzähigkeitsmessungen sind in Tabelle 2 angegeben.

Tabelle 2

| Beispiel Nr. | PA | mod.PPE | PPE | PS | Kautschuk | DIN 53453 Schlagzähigkeit kJ/m² (23° C) | DIN 53453 Kerbschlagzähigkeit kJ/m² (23° C) |
|---|---|---|---|---|---|---|---|
| | Gew.-% | | | | | | |
| | $A_1$ | B | $C_1$ | D | E | | |
| 21 | 50 | 50 $B_3$ | - | - | - | 24,1 | 4,1 |
| 22* | 50 | - | 50 | - | - | 7,1 | 0,2 |
| 23 | 47,8 | 39,1 $B_3$ | - | - | 13,1 | kein Bruch | 14,1 |
| 24 | 50 | 22,7 $B_3$ | 18,2 | - | 9,1 | kein Bruch | 8,7 |
| 25* | 50 | - | 40,9 | - | 9,1 | 10,1 | 0,9 |
| 26 | 65,4 | 28,1 $B_4$ | - | - | 6,5 | 80,1 | 6,4 |
| 27* | 65,4 | - | 28 | - | 6,5 | 8,1 | 0,8 |
| 28 | 72,8 | 18,2 $B_4$ | - | 4,5 | 4,5 | 65,2 | 4,8 |
| 29 | 65,6 | 8,2 $B_4$ | - | 16,4 | 10 | 80,5 | 6,4 |

* Vergleichsbeispiele

Auch in diesen Beispielen wird deutlich, daß sich die erfindungsgemäßen Formmassen im Vergleich zu bekannten Formmassen insbesondere durch eine gute Schlagzähigkeit und Kerbschlagzähigkeit auszeichnen.

Beispiele 30 bis 37

Herstellung modifizierter Polyphenylenether B

$B_5$: 96 Gew.% Poly-(2,6-dimethyl-1,4-phenylen)ether mit einer relativen Viskosität von 0,57 (gemessen an einer 1 gew.%igen Lösung in $CHCl_3$ bei 25°C) und 4 Gew.% Methacrylamid wurden in einen Zweischneckenextruder (ZSK 53, Werner & Pfleiderer) dosiert, in einem ersten Teil unter Verwendung von Knetelementen bei 270°C aufgeschmolzen, in einem zweiten Teil unter Kneten und Verwendung von zurückfördernden Knetelementen bei 270°C umgesetzt und anschließend bei 280°C in einer Entgasungszone bei 280°C durch Anlegen von Vakuum entgast. Die mittlere Verweilzeit im Extruder betrug 3 min. Die austretende Schmelze wurde durch ein Wasserbad geleitet und granuliert. Der IR-spektroskopisch an einem gepreßten Film bestimmte Methacrylamidgehalt im Harz betrug 1,4 Gew.%.

$B_6$: 84 Gew.% PPE (wie bei $B_5$), 8 Gew.% Polystyrol (wie bei $B_1$), 6 Gew.% Methacrylamid und 2 Gew.% Dicumylperoxid wurden wie bei der Herstellung von $B_5$ bei 280°C umgesetzt. Der Methacrylamidgehalt im Harz betrug 2,8 Gew.%.

$B_7$: 64 Gew.% PPE (wie bei $B_5$), 30 Gew.% Polystyrol, 5 Gew.% N-(n-Butyl)methacrylamid und 1 Gew.% Dicumylperoxid wurden wie bei der Herstellung von $B_5$ umgesetzt. Der Gehalt an N-(n-Butyl)-methacrylamid betrug 2,3 Gew.%.

Die Komponenten $B_5$ bis $B_7$ wurden zur Herstellung der erfindungsgemäßen Formmassen mit den folgenden Komponenten A, C, D und E bei 280°C in einem Zweischneckenextruder gemischt, die Formmasse wurde granuliert und im Spritzguß zu Formkörpern verarbeitet.

Komponente $A_2$

Polyamid-6 (Polycaprolactam) mit einem Molekulargewicht (Gewichtsmittelwert) von 34.000.

Komponente $C_2$:

PPE mit einer relativen Viskosität von 0,57 (gemessen in 1 gew.%iger Lösung in $CHCl_3$ bei 25°C).

Komponenten D und E

Diese Komponenten waren die gleichen, wie die in den Beispielen 1 bis 20 eingesetzten Komponenten.

Die Zusammensetzung der einzelnen Massen und die Ergebnisse der Schlagzähigkeits-und Kerbschlagzähigkeitsmessungen sind der Tabelle 3 zu entnehmen.

Tabelle 3

| Beispiel Nr. | PA $A_2$ | mod.PPE B | PPE $C_2$ | PS D | Kautschuk E | DIN 53453 Schlagzähigkeit $kJ/m^2$ ($23^0C$) | DIN 53453 Kerbschlagzähigkeit $kJ/m^2$ ($23^0C$) |
|---|---|---|---|---|---|---|---|
| | Gew.-% | | | | | | |
| 30 | 53,6 | 35,7 $B_5$ | - | - | 10,7 | kein Bruch | 11,2 |
| 31* | 53,6 | - | 35,7 | - | 10,7 | 18,2 | 1,2 |
| 32 | 50,8 | 33,9 $B_5$ | 8,5 | - | 6,8 | kein Bruch | 9,3 |
| 33 | 45,4 | 45,4 $B_6$ | - | - | 9,2 | kein Bruch | 10,1 |
| 34* | 45,4 | - | 45,4 | - | 9,2 | 12,4 | 1,6 |
| 35* | 45,4 | - | 40,9 | 4,5 | 9,2 | 15,3 | 2,4 |
| 36 | 31,7 | 39,7 $B_5$ | 7,9 | 15,9 | 4,8 | 84,2 | 6,2 |
| 37 | 47,0 | 29,9 $B_7$ | - | 12,8 | 10,3 | kein Bruch | 8,3 |

* Vergleichsbeispiele ohne den modifizierten PPE

Beispiele 38 bis 45

Herstellung modifizierter Polyphenylenether B

$B_8$: 97 g (=97 Gew.%) Poly-(2,6-dimethyl-1,4-phenylen)ether ($b_1$) (relative Viskosität 0,59, gemessen in 1-gew.%iger Lösung in $CHCl_3$ bei 25°C) und 3 g (=3 Gew.%) N-Methacryloyl-ε-caprolactam ($b_3$) wurden in einen Zweischneckenextruder (ZSK 53, Werner & Pfleiderer) dosiert, in einem ersten Teil unter Verwendung von Knetelementen bei 270°C aufgeschmolzen, anschließend in einem zweiten Teil unter Kneten und Verwendung von rückfördernden Knetelementen bei 270°C umgesetzt, und anschließend in einer Entgasungszone bei 280°C durch Anlegen von Vakuum entgast. Die mittlere Verweilzeit im Extruder betrug 3 min. Die austretende Schmelze wurde durch ein Wasserbad geleitet, granuliert und getrocknet. Der Gehalt an N-Methacryloyl-ε-caprolactam im Polyphenylenetherharz wurde IR-spektroskopisch zu 1,4 Gew.% bestimmt.

$B_9$: 87 g Poly(2,6-dimethyl-1,4-phenylen)ether (wie bei Herstellung von $B_1$ verwendet), 10 g Polystyrol I(PS 144 C der AG, Schmelzindex (MFI) bei 200°C/5 kg Belastung = 24 g/10 min), 2 g N-Methacryloyl-ε-caprolactam und 1 Gew.% Dicumylperoxid wurden wie bei der Herstellung von $B_1$ bei 280°C umgesetzt. Der Gehalt an N-Methacryloyl-ε-caprolactam im PPE-Harz betrug 0,9 Gew.%.

Zur Herstellung der erfindungsgemäßen Formmassen wurden die modifizierten Polyphenylenether $B_8$ bzw. $B_9$ mit den Komponenten A, C, D und E in einem Zweischneckenextruder bei 280°C gemischt, die Formmasse wurde granuliert und im Spritzguß zu Formkörpern verarbeitet.

Folgende Komponenten A, C, D und E wurden eingesetzt.

Komponente A:

Hier wurde das Polyamid $A_2$ aus den Beispielen 30 bis 37 eingesetzt.

Komponente $C_3$:

Poly-(2,6-dimethyl-1,4-phenylen)ether mit einer relativen Viskosität von 0,59 (gemessen in 1 gew.%iger Lösung in $CHCl_3$ bei 25°C).

Die Komponenten D und E waren die gleichen wie in den Beispielen 1 bis 20.

Die Zusammensetzung der einzelnen Formmassen und die Ergebnisse der Schlagzähigkeits-und Kerbschlagzähigkeitsmessungen sind in Tabelle 4 angegeben.

Tabelle 4

| Beispiel Nr. | Gew.-% PA $A_2$ | mod.PPE B | PPE $C_3$ | PS D | Kautschuk E | DIN 53453 Schlagzähigkeit $kJ/m^2$ (23$^0$C) | DIN 53453 Kerbschlagzähigkeit $kJ/m^2$ (23$^0$C) |
|---|---|---|---|---|---|---|---|
| 38 | 50,9 | 41,7 $B_8$ | - | - | 7,4 | kein Bruch | 10,1 |
| 39* | 50,9 | - | 41,7 | - | 7,4 | 12,6 | 0,9 |
| 40 | 49,1 | 22,3 $B_8$ | 17,9 | - | 10,7 | 80,5 | 8,6 |
| 41 | 50 | 31,8 $B_8$ | - | 9,1 | 9,1 | kein Bruch | 8,9 |
| 42 | 60 | 40 $B_9$ | - | - | - | 24 | 1,7 |
| 43* | 60 | - | 40 | - | - | 5,6 | 0,3 |
| 44 | 54,5 | 36,4 $B_9$ | - | - | 9,1 | 70,3 | 6,2 |
| 45 | 59,1 | 18,2 $B_9$ | 13,6 | - | 9,1 | 60,1 | 4,8 |

* Vergleichsbeispiele

Auch die Ergebnisse dieser Beispiele beweisen die vorteilhaften Eigenschaften der erfindungsgemäßen Formmassen im Vergleich zu bekannten Formmassen.

Beispiele 46 bis 56

Herstellung modifizierter Polyphenylenether B

$B_{10}$: 94 Gew.% Poly(2,6-dimethyl-1,4-phenylenether (PPE) (rel. Viskosität 0,55, gemessen in 1-gew.%iger Lösung in $CHCl_3$ bei 25°C), 5 Gew.% Polystyrol (MFI bei 200°C und 5,0 kg Belastung = 24 g/10 min) und 1 Gew.% Maleinsäuremonoethylester wurden in einen Zweischneckenextruder gegeben und in einem ersten Teil bei 280°C aufgeschmolzen. In einem zweiten Teil wurde unter Kneten und Verwendung von rückfördernden Knetelementen bei 280°C umgesetzt und anschließend das Produkt in einer Entgasungszone bei 280°C durch Anlegen von Vakuum entgast. Die mittlere Verweilzeit im Extruder betrug 3,5 min.

Die extrudierte Schmelze wurde durch ein Wasserbad geleitet und anschließend granuliert und getrocknet.

$B_{11}$: 68,7 Gew.% PPE, 30,6 Gew.% Polystyrol (beides wie bei $B_{10}$) und 0,7 Gew.% Maleinsäure-mono-i-propylester wurden wie bei $B_{10}$ beschrieben umgesetzt.

Folgende Komponenten A, C, D und E wurden eingesetzt:

Komponente A:

Hier wurde die Komponente $A_1$ aus den Beispielen 1 bis 20 eingesetzt.

Komponente $C_4$:

Poly(2,6-dimethyl-1,4-phenylen)ether mit einer relativen Viskosität von 0,55 (in 1-gew.%iger Lösung in $CHCl_3$ bei 25°C).

Komponenten D und E:

Die Komponenten D und E waren die gleichen wie in den Beispielen 1 bis 20.

Die Komponenten A bis E wurden auf einem Zweischneckenextruder bei 280°C abgemischt, die Formmasse wurde granuliert und im Spritzguß zu Formkörpern verarbeitet.

Die Zusammensetzung der Formmassen und die Meßergebnisse sind der Tabelle 5 zu entnehmen.

Tabelle 5 (Alle %-Angaben in Gew.-%)

| Beispiel Nr. | PA $A_1$ | mod.PPE B | PPE $C_4$ | PS D | Kautschuk E | Kerbschlagzähigkeit DIN 53453 $kJ/m^2$ ($23^0C$) | Schmelzindex $280^0C$ (2,16 kg (DIN 53735) g/10 min |
|---|---|---|---|---|---|---|---|
| 46 | 55 | 45 $B_{10}$ | - | - | - | 3,2 | 15 |
| 47* | 55 | - | 45 | - | - | 0,4 | 48 |
| 48 | 45,0 | 45 $B_{10}$ | - | - | 10,0 | 16,5 | 20 |
| 49 | 54,5 | 18,2 $B_{10}$ | 18,2 | - | 9,1 | 10,0 | 24 |
| 50* | 54,5 | - | 36,4 | - | 9,1 | 0,4 | 54 |
| 51 | 51,9 | 33 $B_{10}$ | - | 9,4 | 5,7 | 8,7 | 25 |
| 52* | 51,9 | - | 33,0 | 9,4 | 5,7 | 0,7 | 58 |
| 53 | 45,5 | 45,5 $B_{11}$ | - | - | 9,0 | 6,4 | 10 |
| 54 | 59,1 | 31,8 $B_{12}$ | - | - | 9,1 | 12,1 | 16 |
| 55 | 48,0 | 39 $B_{12}$ | - | - | 13,0 | 16,0 | 13 |
| 56 | 50,0 | 18,2 $B_{12}$ | - | 22,7 | 9,1 | 8,1 | 25 |

* = Vergleichsbeispiele

Beispiel 57 (Vergleichsbeispiel)

47,8 Gew.% Polyamid $A_1$), 38,8 Gew.% PPE $C_4$), 12,9 Gew.% Kautschuk E) und 0,5 Gew.% Maleinsäureanhydrid wurden gemäß Beispiel 55 abgemischt. Das erhaltene Granulat war schwer verarbeitbar.

Beispiel 58 (Vergleichsbeispiel)

42,6 Gew.% Polyamid $A_1$), 38,6 Gew.% PPE $C_4$), 12,8 Gew.% Kautschuk E) und 1 Gew.% eines Styrol/Maleinsäureanhydrid-Copolymerisats (Molverhältnis 1:1) wurden gemäß Beispiel 55 abgemischt. Das Granulat war nur schwer verarbeitbar.

Beispiel 59: Vergleichsbeispiel

45 g PPE (wie bei der Komponente $B_{12}$), 0,8 g Maleinsäureanhydrid und 0,2 g Dicumylperoxid wurden wie für die Komponente $B_{12}$) beschrieben, umgesetzt.

Tabelle 6 zeigt den verbesserten Schmelzindex der erfindungsgemäßen Formmassen im Vergleich zu den Massen der Beispiele 57 bis 59.

Tabelle 6:

| Beispiel Nr. | DIN 53453 Kerbschlagzähigkeit (23°C) kJ/m² | DIN 53735 Schmelzindex 280°C/2,16 kg g/10 min |
|---|---|---|
| 55 | 16,0 | 13 |
| 57* | 3,0 | < 1 |
| 58* | 6,1 | 4 |
| 59* | 8,4 | 8 |

* = Vergleichsbeispiele

Beispiele 60 bis 69

Komponente A

$A_3$: Polyamid-4,6
$A_4$: Polycaprolactam mit einem Molekulargewicht (Gewichtsmittelwert) von 38 000
$A_5$: Polyhexamethylenadipinsäureamid mit einem Molekulargewicht (Gewichtsmittel) von 33 000.

Komponente B

Hier wurden die Komponenten $B_1$ (Beschreibung bei Beispielen 1 bis 20) und B10 (Beschreibung bei Beispielen 46 bis 56) eingesetzt.

Komponente C

$C_5$: Poly(2,6-dimethyl-1,4-phenylen)ether mit einer relativen Viskosität von 0,53 (gemessen in 1 gew.%iger Lösung in $CHCl_3$ bei 25°C).

Komponenten D und E

Hier wurden die gleichen Komponenten wie in den Beispielen 1 bis 20 eingesetzt.

Zur Herstellung der erfindungsgemäßen Formmassen wurden die Komponenten in den in Tabelle 7 angegebenen Mengenverhältnissen auf einem Zweischneckenextruder bei 280°C abgemischt; die mittlere Verweilzeit betrug 2,5 min. Anschließend wurde die Mischung extrudiert, granuliert und im Spritzguß zu Formkörpern verarbeitet.

Die Ergebnisse der Kerbschlagzähigkeitsmessungen (nach DIN 53 453) und der Farbeindruck sind ebenfalls in Tabelle 7 wiedergegeben.

Tabelle 7

| Beispiel Nr. | Gew.% PA | mod. PPE B | PPE $C_5$ | PS D | Kautschuk E | DIN 53 453 Kerbschlagzähigkeit $kJ/m^2$ ($23^0C$) | Eigenfarbe |
|---|---|---|---|---|---|---|---|
| 60 | 47,8 $A_3$ | 34,8 $B_1$ | 4,3 | - | 13,1 | 18 | fast weiß |
| 61 | 47,8 $A_4$ | 34,8 $B_1$ | 4,3 | - | 13,1 | 14 | hellgelb |
| 62 | 47,8 $A_5$ | 34,8 $B_1$ | 4,3 | - | 13,1 | 12 | gelb |
| 63 | 53,7 $A_3$ | 28,9 $B_{10}$ | 2,5 | - | 14,9 | 20 | fast weiß |
| 64 | 53,7 $A_5$ | 28,9 $B_{10}$ | 2,5 | - | 14,9 | 13 | gelb |
| 65 | 50,0 $A_3$ | 16,7 $B_{10}$ | 16,7 | - | 16,6 | 20 | fast weiß |
| 66 | 50,0 $A_5$ | 16,7 $B_{10}$ | 16,7 | - | 16,6 | 12 | mittelgelb |
| 67 | 40,7 $A_3$ | 40,7 $B_1$ | - | 0,8 | 17,8 | 24 | fast weiß |
| 68 | 50,0 $A_3$ | 25,0 $B_1$ | 8,3 | - | 16,7 | 22 | fast weiß |
| 69 | 42,4 $A_3$ | 21,2 $B_{10}$ | 21,2 | - | 15,2 | 18 | fast weiß |

**Ansprüche**

1. Thermoplastische Formmassen, enthaltend als wesentliche Komponenten
A) 5 - 95 Gew.% eines Polyamids
B) 5 - 95 Gew.% eines modifizierten Polyphenylenethers, hergestellt aus
$b_1$) 4,95 - 99,95 Gew.% eines Polyphenylenethers,
$b_2$) 0 - 90 Gew.% eines vinylaromatischen Polymeren,
$b_3$) 0,05 - 10 Gew.%
$b_{31}$) Fumarsäure und/oder
$b_{32}$) eines Maleinimids der allgemeinen Formel I

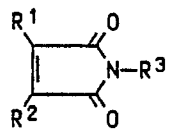 (I),

wobei $R^1$, $R^2$ und $R^3$ Wasserstoff, Alkyl-, Alkoxy-, Cycloalkyl-, Alkenyl-, Aryl-, Arylen-oder Alkylengruppen mit 1 - 12 C-Atomen sind und/oder
$b_{33}$) eines Amid-Gruppen enthaltenden Monomeren mit einer polymerisierbaren Doppelbindung, und/oder
$b_{34}$) eines Lactam-Gruppen enthaltenden Monomeren mit einer polymerisierbaren Doppelbindung, und/oder
$b_{35}$) eines Halbesters oder Halbamids einer $\alpha,\beta$-ungesättigten Dicarbonsäure,
$b_4$) 0 - 80 Gew.% weiterer pfropfaktiver Monomerer und
$b_5$) 0 - 20 Gew.% eines Radikalstarters
C) 0 - 90 Gew.% eines nicht-modifizierten Polyphenylenethers,
D) 0 - 45 Gew.% eines vinylaromatischen Polymeren
E) 0 - 40 Gew.% eines schlagzäh modifizierenden Kautschuks.

2. Thermoplastische Formmassen nach Anspruch 1, dadurch gekennzeichnet, daß die Komponente $b_{33}$) eine Verbindung der allgemeinen Formel II oder III ist:

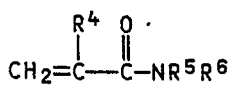 (II)

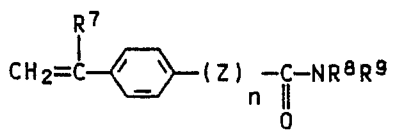 (III)

wobei $R^4$, $R^5$, $R^6$, $R^7$, $R^8$ und $R^9$ Wasserstoff, Alkyl-oder Alkoxygruppen mit 1 bis 12 C-Atomen, Cycloalkylgruppen mit 1 bis 12 C-Atomen oder Arylgruppen und Z eine Alkylengruppe mit 1 bis 12 C-Atomen darstellen und n den Wert 0 oder 1 hat.

3. Thermoplastische Formmassen nach Anspruch 1, dadurch gekennzeichnet, daß die Komponente $b_{34}$) eine Verbindung der allgemeinen Formel IV ist

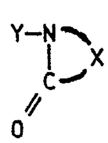 (IV)

wobei X eine lineare oder verzweigte Alkylengruppe mit 2 bis 15 C-Atomen darstellt und Y die allgemeine Formel

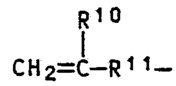

hat,
wobei $R^{10}$ Wasserstoff, eine Alkyl-oder Alkoxygruppe mit 1 bis 4 C-Atomen und $R^{11}$ einen der nachstehenden zweiwertigen Reste

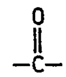

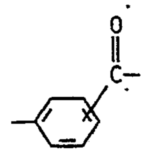 oder

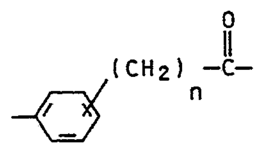

wobei n eine ganze Zahl von 1 bis 4 ist,
darstellen.

4. Thermoplastische Formmassen nach Anspruch 1, gekennzeichnet durch folgende Gehalte:
A) 5 - 95 Gew.% eines Polyamids
B) 5 - 95 Gew.% eines modifizierten Polyphenylenethers, hergestellt aus
$b_1$) 4,95 - 99,95 Gew.% eines Polyphenylenethers,
$b_2$) 0 - 90 Gew.% eines vinylaromatischen Polymeren,
$b_3$) 0,05 - 10 Gew.% Fumarsäure
$b_4$) 0 - 80 Gew.% weitere pfropfaktive Monomere
C) 0 - 90 Gew.% eines nicht-modifizierten Polyphenylenethers,
D) 0 - 45 Gew.% eines vinylaromatischen Polymeren
E) 0 - 40 Gew.% eines schlagzäh modifizierenden Kautschuks.

5. Thermoplastische Formmassen nach den Ansprüchen 1 bis 4, dadurch gekennzeichnet, daß das Polyamid A) zu mindestens 80 Gew.% aus wiederkehrenden Einheiten der Formel V

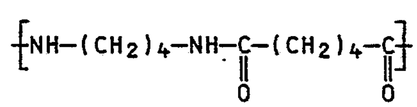

aufgebaut ist.

6. Verfahren zur Herstellung von thermoplastischen Formmassen gemäß den Ansprüchen 1 bis 5, dadurch gekennzeichnet, daß man die Komponenten $b_1$) bis $b_5$) bei 250 bis 350°C miteinander umsetzt und das so erhaltene modifizierte Polyphenylenoxid B) mit den Komponenten A) und C) bis E) bei Temperaturen von 250 bis 320°C vermischt.

7. Verwendung der thermoplastischen Formmassen gemäß den Ansprüchen 1 bis 5 zur Herstellung von Formkörpern.

8. Formkörper, hergestellt aus Formmassen gemäß den Ansprüchen 1 bis 6 als wesentlichen Komponenten.

Europäisches Patentamt

# EUROPÄISCHER RECHERCHENBERICHT

Nummer der Anmeldung

EP 87108068.5

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | EP - A1 - 0 147 874 (GENERAL ELECTRIC COMPANY)<br>* Ansprüche; Seite 5, Zeilen 1-21; Seite 6, Zeilen 5-20; Seite 7, Zeilen 1-22; Beispiel 1 *<br>-- | 1,4,5,7,8 | C 08 L 77/00<br>C 08 L 71/04 |
| D,A | EP - A1 - 0 046 040 (ASAHI-DOW LIMITED)<br>* Ansprüche *<br>-- | 1,4,7,8 | |
| D,A | EP - A1 - 0 024 120 (SUMITOMO CHEMICAL COMPANY LIMITED)<br>* Ansprüche *<br>---- | 1,4 | |
| | | | RECHERCHIERTE SACHGEBIETE (Int. Cl.4) |
| | | | C 08 L 77/00<br>C 08 L 71/00<br>C 08 G 65/00 |

Der vorliegende Recherchenbericht wurde für alle Patentansprüche erstellt.

| Recherchenort | Abschlußdatum der Recherche | Prüfer |
|---|---|---|
| WIEN | 24-09-1987 | WEIGERSTORFER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument